# EUROPEAN PATENT APPLICATION

(11) **EP 4 471 179 A1**
(43) Date of publication of application: **04.12.2024**
(21) Application number: 23176500.9
(22) Date of filing: 31.05.2023
(51) Int. Cl.: C23C 22/68, B32B 15/00, C09J 5/02, C23C 22/73

(54) **BOEHMITE COATING FOR ALUMINIUM ALLOY PRODUCTS**

(71) Applicant: Constellium Bowling Green LLC, Bowling Green, KY 42101 (US); Constellium Automotive USA, LLC, Van Burne Township, MI 48111 (US)
(72) Inventor: LI, Jichao, Plymouth, 48170 (US); BOEHM, Matthieu, 38500 Voiron (FR)
(74) Representative: Constellium - Propriété Industrielle

(57) **Abstract**

The invention relates to a method for structural adhesive bonding a surface of a first product comprising an aluminium alloy to a surface of a second product to make an automotive component comprising the following successive steps:
preferably preparing the surface of the first product,
exposing the optionally prepared surface of the first product to hot water above 60°C to form an oxide layer comprising pseudo Boehmite or Boehmite,
optionally oiling the exposed surface and optionally forming the first product,
structural adhesive bonding of the exposed optionally oiled surface to the surface of the second product with a structural adhesive bonding agent, preferably an epoxy based bonding agent.

The invention relates also to the product obtained with the method.

## Description

### TECHNICAL DOMAIN

The invention relates to the domains of the surface treatment of semi-finished aluminium product for bonding applications in the automotive industry.

### PRIOR ART

The patent DE965715 discloses a method for protecting aluminium and aluminium alloys against corrosion by producing an oxidic layer and subsequently applying a lacquer, it is known that a crystalline oxide (Boehmite) can be produced on aluminium with the aid of boiling water or steam, which oxide contains firmly bound molecule of water (Al₂O₃ H₂O). Layers of such crystalline Boehmite should expediently be 0.2 to 2 µm thick; they are less soluble in numerous aggressive media than the abovementioned amorphous oxide layers which have been produced by chemical or anodic oxidation.

The application JP05209282 discloses a way improve the adhesive property and corrosion resistance of an Al alloy member used as a structural material bonded with an adhesive for a ship, etc. When the surface of an Al alloy member for adhesion is treated, the Al alloy member is degreased or etched with alkali and heated to >=50 °C in hot water, in a wet atmosphere or in pressurized steam to form an aluminum oxide layer on the surface of the member in 50 Angstroms to 1.5.mu.m thickness.

The application WO2007/101627 discloses a method for preparing a component of superficially oxidizing metal, in particular of aluminium, for welding or adhesive attachment, at least a partial region of the oxidized surface of the component. The surface of the component is impinged with superheated water vapor produced from deionized water, so that the surface region impinged with superheated water vapor has after completion of the impingement with superheated water vapor a defined oxide layer modified by the impingement that is not subjected to a further treatment for modifying the surface before the welding or adhesive attachment.

The application EP2899296 discloses a surface-treated aluminum material: characterized by being provided with a surface having a plurality of recesses formed thereon, and being covered with a hydrated aluminum oxide layer with a thickness of 5 nm to 1000 nm; and further characterized in that the area of the plurality of recesses is at least 15% of the surface area.

The application WO2023/049722 described methods and metal products for simultaneously performing a solution heat treatment operation or continuous annealing operation and surface treatment operation using super-heated steam to produce a processed metal product. An elongated metal substrate can be subjected to a solution heat treatment operation or a continuous annealing operation. Additionally, the elongated metal substrate can be subjected to a surface treatment operation. The solution heat treatment operation or continuous annealing operation and the surface treatment operation can be performed simultaneously using super-heated steam to produce the processed metal product.

### PROBLEM TO SOLVE

Aluminium alloys are increasingly used in automotive manufacturing to reduce the weight of vehicles and thus reduce fuel consumption and greenhouse gas emissions.

Conversion coating is generally applied on aluminium alloy products to improve the bonding strength and durability for automotive manufacturers. At this moment, there are two kinds of conversion coating widely used: TiZr-based coating and organophosphate-based coating. Organophosphate coating has functional groups to bond Al substrate and to bond adhesive, respectively, and it has exhibited excellent performance for bonding compared to other coatings. However, it comes at a high cost. TiZr conversion is less expensive than organophosphate-based coating, while its improvement in the bonding performance, especially when stress is applied, is less significant. Therefore, there is a need to develop an alternative conversion coating with an excellent performance but at a low cost.

Further, TiZr-based coating and organophosphate-based coating processes can generate chemical wastes and they have to be treated properly, which makes the process complex. The sustainability requirement is also driving the development of an environmentally friendly coating pretreatment.

High-strength Aluminum alloys such as AA7XXX series also attract more attention to replace the steel parts like B pillar, and these alloys such as AA7075 generally have a high amount of Zn and Cu. The alloying elements can increase the corrosion susceptibility significantly, and current both TiZr- and organophosphate- based coating cannot meet stress-durability bonding requirement. Internal testing shows that anodizing can be a good surface treatment for bonding applications. However, coil anodizing on the thick gauge material is not widely available on the market so far. Furthermore, this pretreatment takes long time and also consumes a lot of electricity. This has limited the application of high strength Al alloys in the automotive industry. Therefore, a new conversion coating for AA7XXX alloys with an excellent bonding performance needs to be developed and the process should be compatible with process for other aluminium alloys so that it can be manufactured with industrial equipment for automotive industry at a high build rate.

### DISCLOSURE OF THE INVENTION

A first subject matter of the invention is a method for structural adhesive bonding a surface of a first product comprising an aluminium alloy to a surface of a second product to make an automotive component comprising the following successive steps:
1. Optionally preparing the surface of the first product,
2. Exposing the optionally prepared surface of the first product to hot water above 60°C to form an oxide layer comprising pseudo Boehmite or Boehmite,
3. Optionally oiling the exposed surface and optionally forming the first product,
4. Structural adhesive bonding of the exposed optionally oiled surface to the surface of the second product with a structural adhesive bonding agent, preferably an epoxy based bonding agent.

Another subject matter of the invention is the bonded part obtained with the method.

### DESCRIPTION OF THE FIGURE

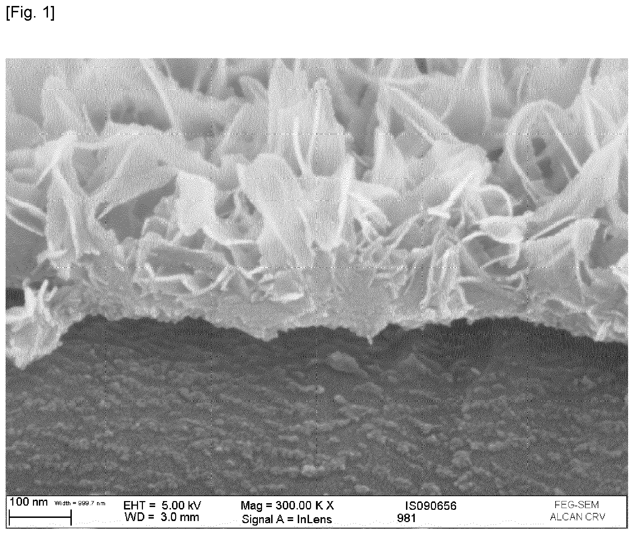

[Fig. 1]: This figure shows a picture of a Boehmite layer obtained after 1 minute to 98°C water.
[Fig. 2]: This figure shows a typical structure of Boehmite layer,
[Fig. 3]: This figure shows the sample for testing the bonding.

### DETAILED DESCRIPTION OF THE INVENTION

All aluminium alloys referred to below are designated, unless otherwise stated, in accordance with the rules and designations laid down by the Aluminum Association in its regularly published Registration Record Series. Unless otherwise stated, compositions are expressed in % by weight. The expression 1.4 Cu means that the copper content expressed in % by weight is 1.4%.

Alloy groups, also called series, are defined in the European norm EN 573-1 (2005).

The metallurgical tempers in question are designated according to the European norm EN-515 (2017).

In a preferred embodiment, the aluminium alloy is an alloy selected from the following alloy series: AA4XXX, AA5XXX, AA6XXX or AA7XXX. AA4XXX alloys are mainly used in cast applications thanks to the properties of Si during the casting process. AA4XXX alloys can also be used as rolled products in the car industry. AA5XXX, AA6XXX are widely used for car applications for their strength and formability. AA6XXX alloys are more specifically used in car applications for the age hardening properties and the surface properties suitable for outer painted product. AA7XXX alloys are alloys of interest due to the very high mechanical properties to replace steel for some parts such as B pillar. AA5XXX, AA6XXX and AA7XXX alloy can be in the form of a rolled product or an extruded product. AA2XXX alloys which is dedicated to aircraft applications are less suitable for car body application due to their corrosion sensitivity. AA1XXX alloy or AA3XXX alloy are less suitable for structural car body applications due to their lower strength.

In an embodiment, the aluminium alloy is AA7075. AA7075 is an alloy of interest in car industry. AA7075 can be solution heat treated in continuous annealing line used for AA6XXX alloys without too much productivity loss compared to AA7XXX alloys which require long solution heat treatment duration. Preferably, the first product is monolithic to obtain the maximum benefit of the strength of AA7075. AA7075 can be either extruded or rolled.

In an embodiment, the surface of the first product which is exposed to hot water is the full surface of the first product.

In an embodiment, the surface of the first product which is exposed to hot water is a portion of the full surface of the first product.

In an embodiment, the first product is a monolithic product. In another embodiment, the first product is a clad product with another aluminium alloy as core material. A monolithic product is cheaper to manufacture than clad product due to the complexity of the process. A clad product can combine the advantage of the core material with the advantage of the clad alloy. Preferably, the core material is an aluminium alloy, preferably selected from the following alloy series: AA4XXX or AA5XXX or AA6XXX or AA7XXX alloy because most of those alloys can be high strength alloys.

In an embodiment, the first product is shaped. By shaped it is understood that the first product is given a 3 dimensional shape, different from the flat shape of a rolled product or the elongated shape of an extruded product. A shaped first product can be obtained by cold, warm or hot forming either before or after the hot water exposure.

The first product, such as rolled product, can be shaped into a three-dimension shape. A rolled product can be a flat rolled product such as sheet, shate or plate. Rolled products can be shaped, for non-limiting example, by roll forming or stamping or spin forming. Shaping can be done either at room temperature or at warm or hot temperature. Shaping can also be done in combination with solution heat treatment or quenching. Shaping can be done either before or after the hot water exposure.

The first product, such as extruded products, can be shaped, for non-limiting example, by bending or press forming. Shaping can be done either at room temperature or at warm or hot temperature. Shaping can also be done in combination with solution heat treatment or quenching. Shaping can be done either before or after the hot water exposure.

In an embodiment, the first product is a rolled product or an extruded product or a cast product, and / or the first product is in a T1, T3, T4, T5, T6, T7 or T8 or O temper or H temper. Said temper are advantageous for aluminium alloys properties.

T1, T3, T4 or T5 temper, for age hardening alloys, such as some of the AA4XXX, AA6XXX and AA7XXX alloys, are advantageous because it allows to benefit from the age hardening effect during the curing of the bonding agent and / or during the bake hardening. T6, T7 or T8 are advantageous tempers for age hardening alloys due to their excellent properties. O or H tempers are advantageous for work hardening alloy such as AA5XXX. H tempers are advantageous for their combination of properties. T1, T3, T4 and O temper are advantageous for their formability properties.

The method comprises preferably preparing the surface of the first product before the water exposure. Preparing the surface cleans or removes lubricant, coolant and dirt to achieve a fully wettable surface. The preparation of the surface of the first product can comprise a surface cleaning step, which can be solvent cleaning and / or degreasing and /or pickling and/or etching and /or de-smutting and or de-oxidizing and / or laser and / or plasma treating or any combination thereof. This cleaning step is advantageous to remove the remain of oil or grease such as lubricants and coolant. Advantageously, the surface preparation, especially in case of etching, does not require to form large number of recesses, also named concave features or cavities, on the surface of the first product. Recesses are preferably limited to less than 15%, preferably 10%, more preferably 5% of an area of the surface. Reducing the formation of recesses is advantageous to reduce the quantity of waste comprising aluminium oxides and the surface preparation agent.

During a degreasing step, the metal loss should be controlled below 0.05g/m²/s, preferably below 0.007g/m²/s. During an etching or a pickling step, the metal loss is typically at least 0.05g/m²/s. A pickling step typically forms recesses on less than 5% of an area of surface, preferably no recesses are formed during a pickling step. An etching step typically forms recesses on more than 5% of an area of the surface.

In an embodiment, the preparation of the surface comprises alkaline degreasing and / or acid pickling. In an embodiment, no etching is carried out. Overall, the surface should be clean, with limited lubricant and oxides after the preparation and before the hot water exposure.

Preferably, degreasing is sufficient to clean or remove from the first product lubricant, coolant and dirt. The degreasing process achieves a fully wettable surface. After degreasing, the first product is preferably thoroughly rinsed using deionized water. The degreasing process can be alkaline or acid, and the chemical can comprise sodium hydroxide, potassium hydroxide, potassium phosphate or a combination thereof and of a surfactant. For example, NaOH can be 2 g/L to 40g/l, preferably from 10 to 25 g/l. Preferably, the degreasing solution is heated up to above 40 °C, preferentially above 50 °C. Preferably the degreasing process is an alkaline degreasing process. Alkaline degreasing is more efficient against oil or rolling lubricant than acid degreasing. The surfactant or solvent can be acetone, alcohol, and fatty acid.

The pickling process can further remove any lubricant residue, oxide and any loosely adhered oxide/subsurface microstructure. Acid pickling is preferred to alkaline pickling because it less sensitive to the formation of recesses. The preferred acid pickling chemicals can be sulfuric acid, nitric acid, phosphoric acid, hydrofluoric acid, hydrochloric acid or a combination thereof, typically a combination of two or three acids. For example, sulfuric acid can be from 2 g/l to about 60 g/L, preferably from 15 g/l to 50 g/l with Al³⁺ or Mg²⁺ concentration preferentially controlled below 3000 ppm. This example can be supplied by Henkel as Bonderit C-IC 243. Preferably, the first product is thoroughly rinsed using deionized water after pickling.

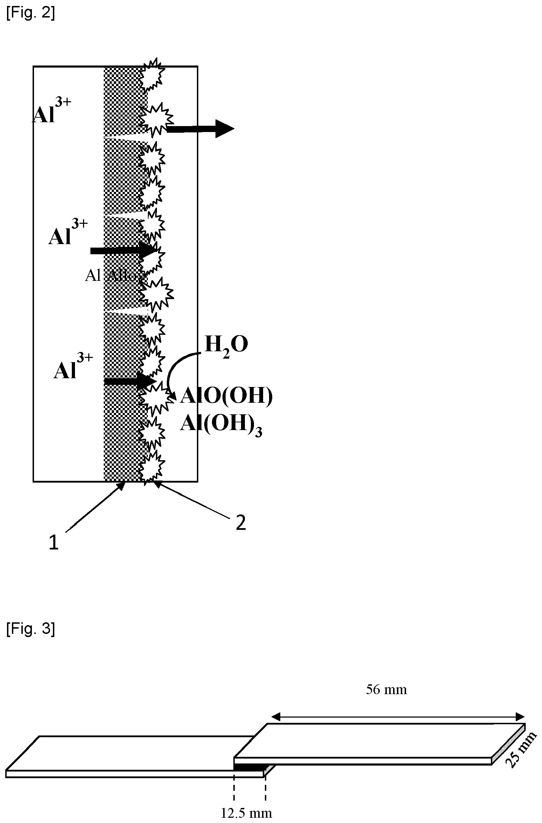

The surface, optionally prepared, of the first product is exposed to hot water above 60°C. The exposure to hot water transforms the layer comprising metastable alumina of the surface into a layer of Boehmite or pseudo Boehmite which comprises hydrated alumina. The Boehmite or pseudo Boehmite layer has two sub-layers as illustrated in Figure 2: an inner compact layer (1) and an outer porous layer (2). Both layers comprise predominantly AIOOH with possible minor amounts of Al(OH)₃ depending on the hot water temperature. Depending on the hot water temperature also, the layers may be crystallized or gelatinous or any combination thereof. The inner layer is strongly bonded to the metal substrate through a chemical bond, and also it is a barrier layer, protecting the substrate from corrosion. The outer layer is porous and can increase the adhesive bonding surface area of adhesive with the substrate and form a mechanical interlocking, increasing the adhesive bonding strength. However, the inner compact layer is the critical component for the bonding performance improvement. The combination of the barrier properties from inner layer and increased surface area from the porous outer layer makes this hydrothermal system very efficient for bonding application. If the hot temperature is not above 60°C, the metastable alumina may transform predominantly into bayerite Al(OH)₃ which is detrimental for adhesive bonding. Preferably, the hot water exposure is done in such a way that the thickness of the inner layer should be at least 10 nm but less than 1 µm. The thickness of the layer can be measured from secondary electron microscope images.

The duration of the hot water exposure is less than 10 minutes, preferably less than 7 minutes, more preferably less than 5 minutes, more preferably less than 4 minutes, more preferably less than 3 minutes, more preferably less than 2 minutes. The hot water temperature is preferably above 70°C, preferably 80°C, more preferably 90°C. The thickness of the layer of Boehmite or pseudo Boehmite increases with contact time but a too long exposure time is detrimental for productivity and performance.

In a preferred embodiment, the hot water is hot liquid water. The oxide grows quickly in the initial 60s, and then it becomes relative stable within 2 minutes. The thickness of the layer of Boehmite or pseudo Boehmite increases with temperature.

The layer thickness depends on water temperature however, for 2 minutes contact time, the Boehmite or pseudo Boehmite layer thickness is similar from 80 °C to 100°C. A temperature from 80°C, preferably from 90°C to 100°C and an exposure less than 3 minutes, preferably less than 2 minutes is an advantageous embodiment. It allows a reliable treatment, for example when dipping the part in the hot water, because the Boehmite or pseudo Boehmite layer is homogeneous especially in complex shape parts such as extrusion or stamped rolled product parts.

In an embodiment, the hot water comprises boiling water or hot liquid water or steam. Increasing the temperature of the hot water increases the formation rate of the Boehmite or pseudo Boehmite layer and can be useful for continuous equipment such as continuous annealing line. Reducing the temperature of the hot water temperature reduces the energy consumption.

In another embodiment, the hot water C comprises boiling water or hot liquid water and the hot water is deionized hot water and optionally the hot water comprises at least one chemical addition among borate, silicate, acetate, sulfate, molybdate, vanadate, chromate, phosphate, adipate, tartrate, tri-ethanol amine, preferably combined with a copolymer. Said chemical addition can be used to improve the coating properties and optimize the process, and to reduce energy consumption.

In an embodiment, the hot water comprises boiling water or hot liquid water and the hot water is deionized hot water and the hot water is characterized by a conductivity below 1 mS/cm, preferably below 0.1 mS/cm, more preferably less than 0.025 mS/cm and/or a pH range from 4 to 9, preferentially from 6 to 8. It allows to reduce the use of chemicals.

In an embodiment, the hot water is steam with temperature higher than boiling water temperature. Steam can facilitate the compact layer growth speed which is convenient when productivity is a requirement, for example in a continuous annealing line or a continuous annealing and solution heat treatment line. It allows to avoid chemicals but may imply higher energy consumption and complex engineered machine.

In an embodiment, the exposure to hot water is done in a continuous surface treatment machine, preferably in line with a continuous annealing line. Continuous machine is useful for high productivity. Continuous annealing line or continuous annealing and solution heat treatment are particularly useful for the production of rolled product but they may require a high energy consumption.

In an embodiment, the hot water is steam with higher temperature than boiling water. It allows exposure duration less than 2 minutes, preferably less than 1 minute, more preferably less than 30 seconds. Reducing the duration increases the productivity and allows the method to be used in a continuous production line such as a continuous annealing line or continuous annealing and solution heat treatment line. Steam requires high energy consumption and requires a specially engineered machine to resist to corrosion from high temperature water.

In an embodiment, the exposure to hot water is done with a batch treatment. A batch treatment can be convenient for complex shaped product, such as extruded product or formed product or stamped product or hot formed product, in order to expose the full surface to hot water.

In an embodiment, if the first product is a rolled product, the exposure to hot water is done preferably by immersion or spray in the continuity of a continuous solution line or a continuous annealing and heat treatment line. It means that the rolled product is not coiled and uncoiled between solution heat treatment and exposure to hot water. This combination insures a productive combination but which can be very expensive due the preferred use of steam. In an embodiment, the hot water or steam exposure is done during the temperature ramp up of the solution heat treatment and / or during the solution heat treatment. But steam may require a higher consumption of energy and increase the risk of corrosion of the line.

In an embodiment, the first product can be exposed to hot water with a machine such the machine disclosed in application WO2007/101627.

Preferably, there is no further surface treatment of the first product which modifies the layer after hot water exposure. For example, preferably it is not necessary to expose the surface of the first product to chemicals comprising cerium, nitrate, lithium, potassium, silicate, corrosion inhibitor, molybdenum or boron nitride. Avoid such layer modifying treatment is advantageous for cost and reduce the need of chemical waste treatment.

Optionally, the exposed surface of the first product is oiled after the hot water exposure. Oiling protects the first product during transportation and storage. When the first product is formed after oiling, the oiling improved the forming method such as stamping.

Preferably, oiling or further surface treatment after hot water exposure do not add inorganic lubricating particles, in particular particles comprising molybdenum or boron nitride, which reduces the use of chemicals.

In an advantageous embodiment, the oil is compatible with structural adhesive bonding of the Boehmite or pseudo Boehmite layer so there is no need for carrying out cleaning or degreasing of the oil from the oiled surface of the first product before structural adhesive bonding, which allows to reduce the use of chemicals. Preferably, the oil is characterized by at least one, preferably all, of the following properties: kinematic viscosity at 40°C: solid, kinematic viscosity at 100°C: from 4.6 to 5.2 mm²/s, preferably about 4.9 mm²/s, density at 60°C: from 510 to 830 kg/m³, preferably about 820 kg/m³, flash point: > 170°C, preferably >180°C, drop melting point: from 43 to 50°C preferably from 45 to 48 °C. Kinematic viscosity is measured according to ASTM D7042. Density is measured according to ASTM D7042. Flash point is measured according to ASTM D93. Drop melting point is measured according to ASTM D 97.

An example of suitable oil is an oil comprising the components listed in Table 1 which can be supplied by Quaker as Drycote 2.

**Table 1**

| **Components** | **Weight %** |
|---|---|
| Mineral oil | 30 - 100 |
| Sulfonate | 1 - 5 |
| Alcohols, C16-18, ethoxylated | 1 - 5 |
| water | <0.1 |
| Chlorine content | <0.02 |
| Wax | remaining |

In an embodiment, the structural adhesive bonding agent is an epoxy-based bonding agent. Preferably the epoxy based bonding agent comprises, by weight, 10 - 50% of a reaction product of Bisphenol A and epichlorohydrin, typically CASRN 25068-38-6, 0.1 - 20 % of a hardener such as an amine, a phenol, an anhydride and a thiol, 5 - 70 % of a filler such as an oxide, for example zinc oxide or calcium oxide, a calcium silicate such as wollastonite, silica optionally grafted with a siloxane such as dimethylsiloxane, 0 to 10 % of an alcohol such as a natural alcohol, 0 -10% of a pigment. Preferably the thickness of the structural bonding agent is between 50µm to 450µm, preferably between 100µm to 400µm, more preferably between 150 to 350µm, more preferably between 200 to 300µm. Too much structural adhesive bonding agent may reduce the shear strength of the bonging. If there is not enough structural adhesive bonding agent, the products to be bonded need to be positioned very accurately to ensure a correct bonding without missing area of structural adhesive bonding.

An exemplary epoxy-based agent comprises the products of Table 2. It can be supplied by Dupont as Betamate 4601 EU.

**Table 2**

| **Component** | **CAS No.** | **Concentration** |
|---|---|---|
| Bisphenol A diglycidyl ether resin (average Mw <=700) | 25068-38-6 | > 40.0 - < 50.0 % |
| Phenol, polymer with formaldehyde, oxiranylmethyl ether | 28064-14-4 | >10.0 - <20.0 % |
| Diallyl bisphenol A | 1745-89-7 | > 0.1 - <1.0 % |

An exemplary epoxy-based agent comprises the products of Table 3. It can be supplied by Dupont as Betamate 1640.

**Table 3**

| **Component** | **CAS No.** | **Concentration** |
|---|---|---|
| 2,2-bis(p-(2,3-Epoxypropoxy)phenyl)propane (Bisphenol A diglycidyl ether) | 1675-54-3 | > 30.0 - < 40.0 % |
| Bisphenol A diglycidyl ether resin (average Mw 700-1100) | 25068-38-6 | > 10.0 - <20.0 % |
| calcium oxide | 1305-78-8 | 5.0 - <10.0 % |
| Cashew (Anacardium occidental) Nutshell Extract, Decarboxylated, Distilled | 8007-24-7 | 0.1 - <1.0% |

An exemplary epoxy-based agent comprises the products of table 4. It can be supplied by Henkel as Teroson EP 8026 GB.

**Table 4**

| **Component** | **CAS No.** | **Concentration** |
|---|---|---|
| Reaction product: BISPHENOL A DIGLYCIDYL ETHER RESIN (average Mw <=700) | 25068-38-6 | 20.0 - 40.0 % |
| zinc oxide | 1314-13-2 | 0.1 - <1% |
| Phenol, 4,4-(1-methylethylidene)bis-, polymer with (chloromethyl)oxirane, reaction products with 2-methyl-1H-imidazole | 68002-42-6 | 0.1 - <0.25% |
| p,p'-Isopropylidenediphenol polymerize with (chloromethyl)oxirane, products of reaction of 2-methyl-1H-imidazole | | |

In an embodiment, the method does not comprise welding and/or the method does not comprise riveting thanks to the bonding durability.

In an embodiment, the second product comprises steel or a composite material, such as a carbon composite. Preferably, the second product comprises an aluminium alloy, and more preferably an alloy selected from the following alloy series: AA4XXX, AA5XXX, AA6XXX or AA7XXX., preferably AA7075 among AA7XXX alloy series. In an embodiment, the surface of the second product is coated with a TiZr coating or an organophosphate based coating. In an embodiment, the surface of second product is optionally prepared, exposing to hot water and optionally oiling, as described in the present disclosure for the first product.

The bonded part obtained by the method exhibits high bond durability to mechanical stress and corrosion. As used herein, "bond durability" refers to an ability of a bonding agent bonding two products together to withstand a combined exposure of temperature/humidity, stress and salts. Bond durability is characterized in terms of cycle numbers applied to the structural adhesive bonding until the bonding fails. Preferably, the bonding durability is at least 45 cycles, preferably at least 50 cycles.

The bond durability testing is described as below. Samples of the first product are cut to 56 mm long and 25mm wide samples. Two samples of the first product are bonded as shown in Figure 3 with an overlap of 12.5mm long. The bonding agent is an epoxy-based bonding agent as described above. The samples are exposed vertically to a constant load of 2.4 kN in the length direction and are exposed to cycles consisting of:
a) 15 minutes immersion in 5% of NaCl solution at room temperature,
b) 105 minutes drying in the air at room temperature,
c) 22 hours at 50 +/-2 °C with 90% RH (Relative humidity),

This cycle is repeated for 5 days. Every 5 days, samples are exposed at 50°C 90% relative humidity during 48 hours. The number of cycles of the test is the number of immersion of 15 minutes immersion in 5% NaCl solution. Room temperature is around 25°C.

In an embodiment, the bonded part is a part of a car, preferably a bonnet, tail gate, door, rocker, header or roof bow. Bonnet, tail gate and door are usually manufactured with rolled products. Rocker, header or roof bow are usually made with extruded products.

### PREFERED EMBODIMENTS

A preferred embodiment is the method of the invention wherein the first product is a rolled product and the method steps are preferably as follows. The surface preparation comprises degreasing, preferably alkaline degreasing, and / or pickling, preferably acid pickling. The exposed surface of the first product is oiled and the oiled first product is preferably formed, preferably stamped and no cleaning or degreasing is carried out after oiling and before structural adhesive bonding. The first product preferably is formed before the preparation of the surface or between oiling and structural adhesive bonding.

A preferred embodiment is the method of the invention wherein the first product an extruded product and the method steps are preferably as follows. The surface preparation comprises degreasing, preferably alkaline degreasing, and / or pickling, preferably acid pickling. The exposed surface of the first product is oiled and the oiled first product is preferably formed and no cleaning or degreasing is carried out after oiling and before structural adhesive bonding.

A preferred embodiment is the method of the invention wherein the first product is a rolled product and the aluminium alloy is an alloy selected from the following alloy series: AA4XXX or AA5XXX or AA6XXX alloy and the method steps are preferably as follows. Preferably, the surface preparation comprises degreasing, preferably alkaline degreasing, and / or pickling, preferably acid pickling. Preferably no etching is carried out. The exposed surface of the first product is oiled and preferably the first product is formed, preferably stamped, and preferably no cleaning or degreasing is carried out after oiling and before structural adhesive bonding. The first product preferably is formed before the preparation of the surface or between oiling and structural adhesive bonding.

A preferred embodiment is the method of the invention wherein the first product is an extruded product and the aluminium alloy is an alloy selected from the following alloy series: AA4XXX or AA5XXX or AA6XXX alloy. Preferably, the surface preparation comprises degreasing, preferably alkaline degreasing, and / or pickling, preferably acid pickling. Preferably no etching is carried out. The exposed surface of the first product is oiled and preferably the first product is formed, and preferably no cleaning or degreasing is carried out after oiling and before structural adhesive bonding. The first product preferably is formed before the preparation of the surface or between oiling and structural adhesive bonding.

A preferred embodiment is the method of the invention wherein the aluminium alloy of the first product is an AA7XXX alloy and the method steps are preferably as follows. Preferably the surface preparation comprises degreasing, preferably alkaline degreasing, and / or pickling, preferably acid pickling. Preferably no etching is carried out. The exposed surface of the first product is optionally oiled and optionally the first product is formed, preferably stamped if the first product is a rolled product, and preferably no cleaning or degreasing is carried out after oiling and before structural adhesive bonding. The first product preferably is formed before the preparation of the surface or between oiling and structural adhesive bonding.

A preferred embodiment is the method of the invention wherein the first product is a cast product and preferably the aluminium alloy is an AA4XXX alloy. Preferably the surface preparation comprises degreasing, preferably alkaline degreasing, and / or pickling, preferably acid pickling. Preferably no etching is carried out. Optionally the exposed surface of the first product is oiled and preferably no cleaning or degreasing is carried out after oiling and before structural adhesive bonding.

### EXAMPLES

The disclosure is further illustrated by the following examples. These examples are intended only to illustrate the invention and not to limit it.

Alloys AA5982, AA6111, AA6082 and AA7075, were used to evaluate the structural adhesive bonding performance of Boehmite pretreatment. AA6111 is generally considered as the benchmark alloy for automotive alloys in term of bonding performance, while testing on AA7075, which with current pretreatment fails very early, represents the robustness of this pretreatment.

AA5982, AA6111 and AA7075 were in the format of rolled sheets, and AA6082 materials was directly cut from rocker or header which are extruded products.

AA7075 was in F temper and AA6082 was in T6 temper, while both has coolant residues on the surface either from rolling process or from machining process.

The surface of AA5982 and AA6111 was prepared. AA5982 and AA6111 were first degreased in an alkaline solution, then fully rinsed with DI water and solution heat treated and quenched on a CALP line to obtain a T4 temper. AA5982 and AA6111 materials were then pickled in water containing 10% of Bonderite C-IC 243 for 30s at 70 °C and then thoroughly rinsed using deionized water. They were dipped in hot deionized water for various time according to Table 5. Some samples then were oiled with 1g/m² of oil Quaker Drycote 2 (as described above according to Table 1, lubrification : yes) before adhesive bonding.

The surface of AA7075 and AA6082 was prepared. AA7075 and AA6082 materials were first degreased in an alkaline solution for 2 mins at 55 °C, thoroughly rinsed with DI water, pickled in water containing 10% Bonderite C-IC 243 and finally thoroughly rinsed with deionized water. They were then immersed in hot deionized water for 2 minutes. Some samples then were oiled, according Table 5 (lubrification : yes), with 1g/m² of oil Quaker Drycote 2 (as described above according to Table 1), before adhesive bonding.

The samples were bonded using epoxy based BETAMATE^{™} 4601 EU described above and the adhesive thickness was 250µm. It was cured at 180°C for 30 minutes.

The samples were then submitted to the bond durability test described above. The results are shown in the Table 5. Samples showing failures before test is stopped is marked with * and it indicates the number of cycles at bonding failure. # indicates reference materials for comparison.

**Table 5**

| Alloy | Pretreatment in water | | Inner Layer thickness (nm) | Lubrification | Bonding cycles, position 1 on the top and 6 on the bottom | | | | | | Comment |
|---|---|---|---|---|---|---|---|---|---|---|---|
| | Temp. (°C) | Time, (s) | | | | | | | | | |
| | | | | | 1 | 2 | 3 | 4 | 5 | 6 | |
| AA5982 | 100 | 300 | Not available | No | 48 | 48 | 48 | 48 | 48 | 48 | Rolled |
| AA6111 | 100 | 15 | 50 | Yes | 76 | 76 | 76 | 76 | 76 | 76 | Rolled |
| AA6111 | 100 | 30 | 60 | Yes | 68 | 68 | 68 | 68 | 68 | 68 | Rolled |
| AA6111 | 100 | 60 | 100 | Yes | 76 | 76 | 76 | 76 | 76 | 76 | Rolled |
| AA6111 | 100 | 120 | 175 | Yes | 75 | 75 | 75 | 75 | 75 | 75 | Rolled |
| AA6111 | 100 | 300 | 300 | Yes | 51 | 51 | 51 | 51 | 51 | 51 | Rolled |
| AA6111 | 100 | 300 | 300 | No | 48 | 48 | 48 | 48 | 48 | 48 | Rolled |
| AA6111 | 80 | 120 | Not available | Yes | 51 | 51 | 51 | 51 | 51 | 51 | Rolled |
| AA6082 | 100 | 120 | Not available | No | 50 | 50 | 50 | 50 | 50 | 50 | Rocker, extrusion |
| AA6082 | 100 | 120 | Not available | No | 50 | 50 | 50 | 50 | 50 | 50 | Header, extrusion |
| AA7075 | 100 | 120 | Not available | No | 50 | 50 | 50 | 50 | 50 | 50 | Rolled |
| AA7075 | 80 | 120 | Not available | Yes | 52 | 52 | 52 | 52 | 52 | 52 | Rolled |
| AA7075 | 100 | 120 | Not available | Yes | 50 | 50 | 50 | 50 | 50 | 50 | Rolled |
| AA7075 # | Organophospha te | | Not available | Yes | 4 | 4 | 4 | 3* | 4* | 4* | Rolled |
| AA7075 # | Anodizing | | Not available | No | 45 | 45 | 45 | 45 | 45 | 45 | Rolled |

Table 6 Lap shows shear stress of AA6082 and AA7075 after adhesive bonding test (50 cycles). Lube was applied on the surface before adhesive bonding on sample 7075-l, while no lube on 7075-d.

**Table 6**

| Materials | Lap shear Stress, MPa | | | | | |
|---|---|---|---|---|---|---|
| | 1 | 2 | 3 | 4 | 5 | 6 |
| Header AA6082 | 25 | 23 | 25 | 28 | 27 | 26 |
| Rocker AA6082 | 21 | 26 | 22 | 26 | 26 | 21 |
| AA7075-d | 26 | 21 | 22 | 24 | 26 | 23 |
| AA7075-l | 22 | 23 | 23 | 22 | 22 | 25 |

The examples demonstrate that the method can replace the reference treatment with less chemicals and environmental foot print. Further, the method of the invention improves the quality of the bonding for AA7075 alloy. The method allows the bonding of material with oil.

## Claims

1. A method for structural adhesive bonding a surface of a first product comprising an aluminium alloy to a surface of a second product to make an automotive component comprising the following successive steps:
preferably preparing the surface of the first product,
exposing the optionally prepared surface of the first product to hot water above 60°C to form an oxide layer comprising pseudo Boehmite or Boehmite,
optionally oiling the exposed surface and optionally forming the first product,
structural adhesive bonding of the exposed optionally oiled surface to the surface of the second product with a structural adhesive bonding agent, preferably an epoxy based bonding agent.

2. A method according to any preceding claim wherein the aluminium alloy is an alloy selected from the following alloy series: AA4XXX, AA5XXX, AA6XXX or AA7XXX.

3. A method according to any preceding claim wherein the aluminium alloy is AA7075,

4. A method according any preceding claim wherein the surface preparation comprises alkaline degreasing and / or acid pickling

5. A method according any preceding claim wherein no etching is carried out.

6. A method according to any preceding claim wherein the hot water comprises boiling water or hot liquid water and the hot water is deionized hot water and the hot water comprises at least one chemical addition among borate, silicate, acetate, sulfate, molybdate, vanadate, chromate, phosphate, adipate, tartrate, tri-ethanol amine preferably combined with a copolymer.

7. A method according to any claim 1 to 4 wherein the hot water comprises boiling water or hot liquid water and the hot water is deionized hot water and the hot water is **characterized by** a conductivity below 1 mS/cm, preferably below 0.1 mS/cm and more preferably less than 0.025 mS/cm and/or a pH range from 4 to 9, preferentially from 6 to 8.

8. A method according to any preceding claim wherein the exposure to hot water is done in a continuous surface treatment machine, preferably in line with a continuous annealing line.

9. A method according to any claim preceding claim wherein the exposure to hot water is done in a batch treatment.

10. A method according any preceding claim wherein the exposed surface is oiled with an oil which is **characterized by** at least one, preferably all, of the following properties, kinematic viscosity at 40°C: solid, kinematic viscosity at 100°C: from 4.6 to 5.2 mm²/s, preferably about 4.9 mm²/s, density at 60°C: from 510 to 830 kg/m3, preferably about 820 kg/m3, flash point: > 170°C, preferably >180°C, drop melting point: from 43 to 50°C preferably from 45 to 48 °C.

11. A method according to claim 9 wherein the first product is a rolled product and wherein the surface of the first product is oiled and the oiled first product is preferably formed, preferably stamped and wherein no cleaning or degreasing is carried out after oiling and before structural adhesive bonding.

12. A method according any preceding claims wherein the structural adhesive bonding agent is an epoxy-based bonding agent comprising by weight, 10 - 50% of a reaction product of Bisphénol A and epichlorohydrin, typically CASRN 25068-38-6, 0.1 - 20 % of a hardener such as an amine, a phenol, an anhydride and a thiol, 5 - 70 % of a filler such as an oxide, for example zinc oxide or calcium oxide, a calcium silicate such as wollastonite, silica optionally grafted with a siloxane such as dimethysiloxane, 0 to 10 % of an alcohol such as a natural alcohol, 0 - 10% of a pigment and/or the thickness of the structural bonding agent is between 50µm to 450µm, preferably between 100µm to 400µm, more preferably between 150 to 350µm, more preferably between 200 to 300µm.

13. A method according to any preceding claim wherein the second product comprises an aluminium alloy selected from the following alloy series AA4XXX, AA5XXX, AA6XXX or AA7XXX and preferably AA7075.

14. A method according to any preceding claim wherein the surface of the second product comprises a TiZr-based coating or organophosphate-based coating or the surface of the second product is prepared by optionally preparing, exposing to hot and optionally oiling.

15. Bonded part according to any preceding claim wherein the bonding durability is at least 45 cycles, preferably at least 50 cycles.
